Europäisches Patentamt

European Patent Office

Office européen des brevets

(11) Publication number: **0 300 839**
A2

# EUROPEAN PATENT APPLICATION

(21) Application number: 88306839.7

(22) Date of filing: 25.07.88

(51) Int. Cl.⁴: **B 29 C 55/04**
B 29 C 71/00
//B29K77:00,B29L7:00

(30) Priority: 23.07.87 BG 80692/87

(43) Date of publication of application:
25.01.89 Bulletin 89/04

(84) Designated Contracting States:
CH DE ES FR GB IT LI NL

(71) Applicant: SU "KLIMENT OHRIDSKI"
Boul. Ruski
Sofia (BG)

(72) Inventor: Avramova, Nadka Vassileva
Komplex Mladost-4 Block 444-A
Sofia (BG)

Avramov, Issak Avramov
Komplex Mladost-4 Block 444-A
Sofia (BG)

Fakirov, Stoyko Hristov
Komplex Hypodruma Block 108-E
Sofia (BG)

Schultz, Jerold Marvin
Dpt. Chemical Engineering University of Delaware
Newark Delaware 19716 (US)

(74) Representative: Silverman, Warren et al
HASELTINE LAKE & CO. Hazlitt House 28 Southampton
Buildings Chancery Lane
London WC2A 1AT (GB)

(54) Method for the production of high elasticity modulus high strength polymeric materials.

(57) High elasticity modulus, high strength thermoplastic polymer materials are produced by a procedure wherein a polymer melt, such as polyamide melt, is heated to a temperature that is from 20 to 100°C higher than the melting temperature of the polymer in the absence of oxygen and formed into a film which is subjected to rapid quenching at a temperature below 0°C, the film thus obtained being subjected to drawing (orientation) at ambient temperature and annealing with fixed ends at a temperature of from 100 to 160°C under conditions such that it is not oxidised.

EP 0 300 839 A2

## Description

## METHOD FOR THE PRODUCTION OF HIGH ELASTICITY MODULUS HIGH STRENGTH POLYMERIC MATERIALS

This invention relates to a method for the production of high modulus, high strength polymeric materials and more particularly to a method for the production of such materials from thermoplastic polymers which are partially crystalline under normal conditions.

It is known that the mechanical properties of polymers can be improved substantially by orientation. (See "Ultra-High Modulus Polymers, Ed.A.Cafferi and I.M.Ward, Applied Science Publishers, London, 1983). A high degree of orientation is achieved with polyethylene terephthalate by two-stage orientation at ambient temperature, followed by annealing at a temperature close to the melting point, the procedure resulting in an improvement of the mechanical strength of the polymer. (See S.Fakirov and D.Stahl, Angew. Makromol. Chemie, 102 (1982) 117). Additional solid state polycondensation provides another method for increasing the degree of orientation and the mechanical properties of polymers. (See S.Fakirov and N.Avramova, Acta Polymerica, 33 (1982) 4, 271).

The known methods have certain disadvantages, particularly in respect of their high energy consumption and insufficient effectiveness with respect to improvement of the physiomechanical properties of the polymers concerned.

An object of the invention is to provide a method for the production of high elasticity modulus, high strength polymeric materials based on thermoplastic polymers which are partially crystalline under normal conditions, the materials possessing a higher tensile strength and a higher elasticity modulus than comparable materials prepared by known methods.

According to the present invention, there is provided a method for the production of high elasticity modulus, high strength materials from partially crystalline thermoplastic polymers, by orientation at ambient temperature and annealing, characterised in that a polymer melt is heated to a temperature that is from 20 to 100°C higher than the melting temperature of the polymer in the absence of oxygen and formed into a film which is subjected to rapid quenching at a temperature below 0°C, the film thus obtained being subjected to drawing (orientation) at ambient temperature and annealing with fixed ends at a temperature of from 100 to 160°C under conditions such that it is not oxidised.

The method according to the invention is based on melting of the polymer which will usually have been pre-dried at 105-190°C for 2 hours in vacuum. The polymer is then heated to a temperature of from 20 to 100°C above the melting point of the polymer in the absence of oxygen, usually for from 1 to 30 minutes. The temperature and duration of heating are chosen in accordance with the thermal stability of the polymer, its glass transition temperature and the crystallisation rates. The purpose of this treatment is to destroy the crystallisation centres, i.e. the so-called "melt memory erasing". Then the melt is immediately "frozen" into an amorphous (vitreous or glassy) state by quenching in a bath having a temperature below 0°C, usually from 0 to -194°C, preferably between -100° and -194°C. Immediately after its preparation, the amorphous polymer is subjected to drawing in order to achieve orientation thereof. The oriented polymer is annealed usually with ends fixed at a temperature of from 100 and 160°C for 30 to 180 minutes, usually in vacuum or inert atmosphere. Polymers resistant to oxidation can be annealed in air as well.

The method of the invention enables commercially available polymers to be converted into materials with tensile strength and elasticity modulus which are from 4 to 10 times higher than the respective values for these parameters for the polymers when not treated by the method of this invention.

The method of this invention is applicable to a wide variety of polymers of which polyamides represent a preferred class.

The following Example illustrates this invention.

## EXAMPLE

Commercial polyamide-6 (DuPont, USA) is dried in vacuum at 120°C for 2 hours. Then the material is melted at 300°C and held at this temperature for 20 minutes. The melt is extruded through a nozzle at a flow rate from 10 to 30 g/min onto metal rolls rotating at 0.5 to 2 Hz. The rolls are immersed in a bath having a temperature between -100 and -194°C. A continuous film is obtained having a thickness between 10 and 150 micrometers depending on the roll gap. Strips of this film having a length between 5 and 8 cm are oriented at room temperature in a draw ratio 3x. The oriented samples are annealed in an inert atmosphere or vacuum at 100 - 160°C for 3 hours. The averaged results of the physicomechanical tests of the polyamide-6 thus obtained as well as those for the material obtained by rapid quenching of the melt (without annealing) and the results for the starting polyamide (DuPont, USa) are given in the following Table.

Table

| Parameter | Polyamide-6 ultraquenched after annealing of the melt | Polyamide-6 ultraquenched | Poly-amide 6 (DuPont USa) |
|---|---|---|---|
| I.  Prior to drawing | | | |
| 1.  Elasticity modulus E (MPa) | 800 | 200 | 480 |
| 2.  Tensile strength (MPa) | 110 | 55 | 40 |
| 3.  Relative elongation (%) | 200 | 90 | 300 |
| II.  After drawing | | | |
| 1.  Elasticity modulus E (MPa) | 2500 | 420 | 1100 |
| 2.  Tensile strength (MPa) | 250 | 55 | 110 |
| 3.  Relative elongation (%) | 25 | 20 | 20 |
| III.  After drawing and annealing with fixed ends | | | |
| 1.  Elasticity modulus E (MPa) | 4500 | 800 | 1350 |
| 2.  Tensile strength (MPa) | 360 | 120 | 150 |
| 3.  Relative elongation (%) | 9 | 25 | 20 |

## Claims

1. A method for the preparation of high elasticity modulus, high strength materials from partially crystalline thermoplastic polymers, by orientation at ambient temperature and annealing, characterised in that a polymer melt is heated to a temperature that is from 20 to 100°C higher than the melting temperature of the polymer in the absence of oxygen and formed into a film which is subjected to rapid quenching at a temperature below 0°C, the film thus obtained being subjected to drawing (orientation) at ambient temperature and annealing with fixed ends at a temperature of from 100 to 160°C under conditions such that it is not oxidised.

2. A method as claimed in claim 1, wherein the polymer is a polyamide.

3. A method as claimed in claim 2, wherein the polymer is polyamide-6.

4. A method as claimed in any preceding claim, wherein the polymer has been pre-dried by heating to 105-190°C for 2 hours in vacuum.

5. A method as claimed in any preceding claim, wherein the polymer is kept at from 20 to 100°C above its melting point for from 1 to 30 minutes.

6. A method as claimed in any preceding claim, wherein the rapid quenching takes place at a temperature of from 0°C to -194°C.

7. A method as claimed in any preceding claim, wherein the annealing takes place for 30 to 180 minutes.

8. A method as claimed in any preceding claim, wherein the annealing takes place with the ends of the film fixed.